# EUROPEAN PATENT APPLICATION

(11) **EP 2 254 072 A1**
(43) Date of publication of application: **24.11.2010**
(21) Application number: 10005146.5
(22) Date of filing: 17.05.2010
(51) Int. Cl.: G06F 21/00

(54) **Biometric authentication unit and biometric authentication method**

(30) Priority: 22.05.2009 JP 2009124140
(71) Applicant: Hitachi, Ltd., Chiyoda-ku Tokyo 100-8280 (JP)
(72) Inventor: Yamada, Takashi, Chiyoda-ku Tokyo (JP)
(74) Representative: Beetz & Partner

(57) **Abstract**

Disclosed is a biometric authentication unit. When a HDD password is to be input at the startup of a BIOS of a personal computer, the biometric authentication unit (100) prompts a user to enter biometric information, converts the entered biometric information to a corresponding password, and transmits the password to the personal computer (106) through a USB interface (401) for password authentication purposes. After an OS is subsequently started up, the biometric authentication unit (100) changes an enumeration setting from a USB keyboard interface descriptor to a biometric authentication unit interface descriptor to permit the registration of biometric information and password or update of them. Consequently, the biometric authentication unit (100) can avoid the problem of password authentication, perform highly reliable biometric authentication with a simple interface for HDD authentication (203) or like purposes at BIOS startup, and register biometric authentication information independently of the personal computer (106).

## Description

### BACKGROUND OF THE INVENTION

The present invention relates to a unit and a method for biometric authentication. More specifically, the present invention relates to a biometric authentication unit that is connected to a personal computer incorporating a BIOS (Basic Input/Output System) having a password authentication function with a simple and suitable for providing authentication, and also relates to a biometric authentication method for use in the above-mentioned biometric authentication unit.

A password authentication method has been most widely used as a method of protecting an information security system. As is well known, the password authentication method is used to authenticate the user of a particular function by prompting the user to enter a string of characters and numerals.

The password authentication method is most frequently used in a personal computer which is widespread as a versatile information processing device. The password authentication method for the personal computer uses, for instance, a login password for an OS (Operating System) or a HDD password that locks a HDD (Hard Disk Drive) to limit the startup of the OS. Especially, the HDD password provides a highly important authentication scheme that directly locks hardware to prevent its contents from being read even when it is connected to another personal computer. Recently marketed personal computers come standard with the HDD password as it is compliant with the ATAPI (AT Attachment Packet Interface) standard related to the BIOS (Basic Input/Output System) of a personal computer.

However, if a password is known to someone else during the use of the password authentication method, it can be misused for fraudulent purposes. To avoid such an operational problem, it is necessary to update the password on a periodic basis. Further, the user may forget a registered password due to its complicatedness if the user has not used it for an extended period of time.

In recent years, a biometric authentication method is highlighted as an authentication method that addresses the above problem. The biometric authentication method uses information unique to each individual such as a fingerprint, a finger vein pattern, or a palm vein pattern. As the biometric authentication method uses a part of a human body as authentication information, the user will not possibly forget or lose it unlike a complicated password or a key. Further, it is extremely difficult for someone else to impersonate a legitimate user.

A conventional technology for integrating the biometric authentication method into the startup sequence of a personal computer is disclosed, for instance, in JP-A-2007-280218. When the BIOS starts upon personal computer power-on, this technology performs a fingerprint authentication process and stores authentication data in a memory. When the OS is about to start up subsequently, this technology uses the authentication data stored in the memory to verify the authenticity of the user of a personal computer. If the authenticity of the user is verified, this technology allows the OS to start up.

However, the technology disclosed in JP-A-2007-280218 assumes that a biometric authentication function is incorporated in a personal computer. Further, it uses a processor and a memory of the personal computer as personal authentication resources, and requires the development of unique control software for use in authentication processing and personal computer boot process control. Therefore, if the personal computer incorporating the biometric authentication function is unavailable, the biometric authentication function cannot be exercised.

The present invention has been made to address the above problem. It is an object of the present invention to provide a highly reliable biometric authentication unit that can avoid the problem of password authentication, perform a biometric authentication sequence with a simple interface for HDD authentication or like purposes at BIOS startup, and register biometric authentication information independently of a personal computer.

### SUMMARY OF THE INVENTION

The biometric authentication unit according to the present invention includes a memory part that is connected to a personal computer through a USB interface. The memory part stores authentication format biometric information in association with password information. A USB keyboard interface descriptor and a biometric authentication unit interface descriptor are set in a USB descriptor in such a manner that they are mutually exclusive. As an initial enumeration setting, the USB keyboard interface descriptor is selected by default.

When the input of a HDD password is demanded during a BIOS startup sequence of the personal computer, a user is prompted to enter biometric information. The entered biometric information is converted to a corresponding password and transmitted to the personal computer through the USB interface for password authentication purposes.

After the OS starts up subsequently, the enumeration setting is changed to the biometric authentication unit interface descriptor so that the biometric information and password can be registered and changed.

When the biometric authentication unit according to the present invention is connected to a personal computer with a USB cable, a HDD password can be entered as a substitute for biometric information. This makes it possible to use the biometric information with any personal computer. Further, highly reliable security can be provided because biometric information unique to each individual is used.

### BRIEF DESCRIPTION OF THE DRAWINGS

FIG. 1 is a diagram illustrating the hardware configuration of a biometric authentication unit according to an embodiment of the present invention.
FIG. 2 is a diagram illustrating the configuration of a software module of the biometric authentication unit according to an embodiment of the present invention.
FIG. 3 shows an example of a table indicating the correspondence between biometric authenticationinformation and passwords.
FIG. 4 shows an example of a HDD password input screen according to an embodiment of the present invention.
FIG. 5 is a block diagram illustrating a USB legacy emulation function of a BIOS that is used when an HDD password is input into a personal computer.
FIG. 6 is a flowchart illustrating a process that is performed by a program of the biometric authentication unit to register biometric information and a HDD password or update them.
FIGS. 7A to 7F show biometric information management screens for registering biometric information and a HDD password in the biometric authentication unit or updating them.
FIG. 8 is a diagram illustrating a typical configuration of a USB descriptor retained by firmware of the biometric authentication unit.
FIG. 9 is a timing diagram illustrating how the biometric authentication unit exercises control over setting change processing after OS startup.
FIG. 10 is a timing diagram illustrating a control procedure that is performed to let an OS recognize the biometric authentication unit as a biometric authentication device instead of a USB keyboard.

### DETAILED DESCRIPTION OF THE PREFERRED EMBODIMENT

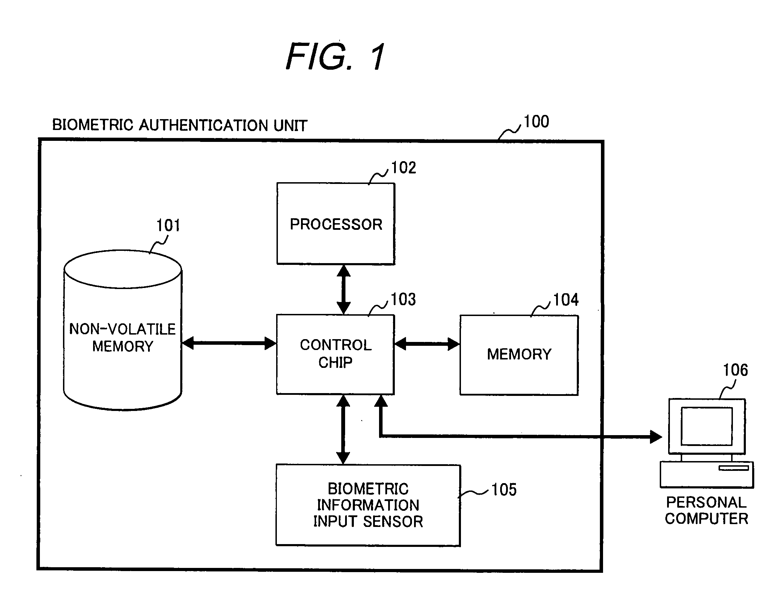

An embodiment of the present invention will now be described with reference to FIGS. 1 to 10.

First of all, the hardware configuration of a biometric authentication unit according to an embodiment of the present invention will be described with reference to FIG. 1.

FIG. 1 is a diagram illustrating the hardware configuration of the biometric authentication unit according to an embodiment of the present invention.

As shown in FIG. 1, the biometric authentication unit according to the present embodiment includes a non-volatile memory 101, a processor 102, a control chip 103, a memory 104, and a biometric information input sensor 105. In general, the processor 102, the control chip 103, and the memory 104 are integrated into a microcomputer.

In the biometric authentication unit 100, in accordance with a program loaded into the memory, the processor 102 compares biometric information input from the biometric information input sensor 105 against biometric information stored in the non-volatile memory 101, and determines whether authentication is successful. The control chip 103 is capable of communicating with a personal computer through a USB interface.

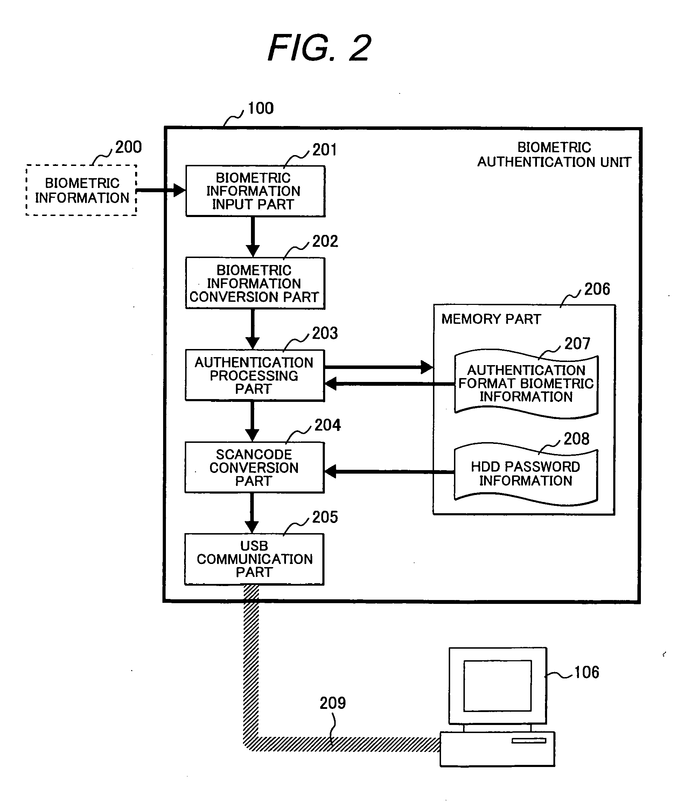

An operation performed by the biometric authentication unit according to an embodiment of the present invention to transmit a HDD password to a personal computer will now be described with reference to FIGS. 2 to 5.

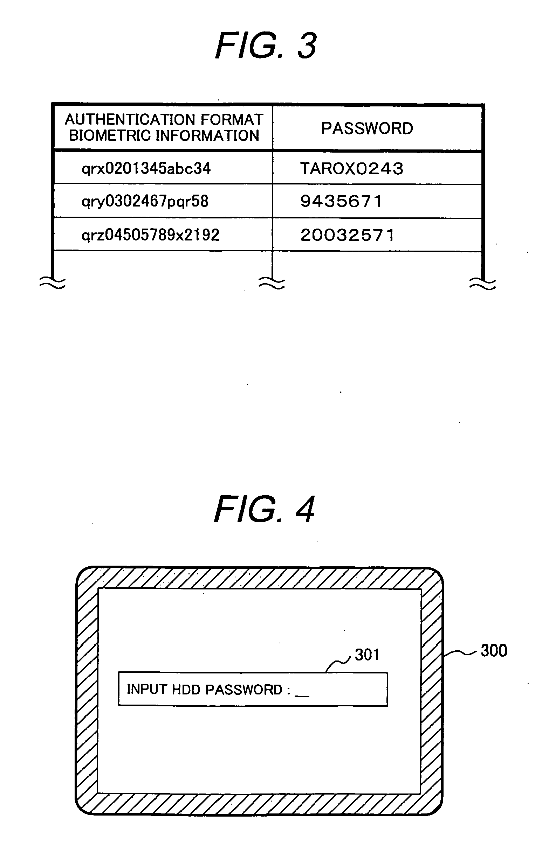

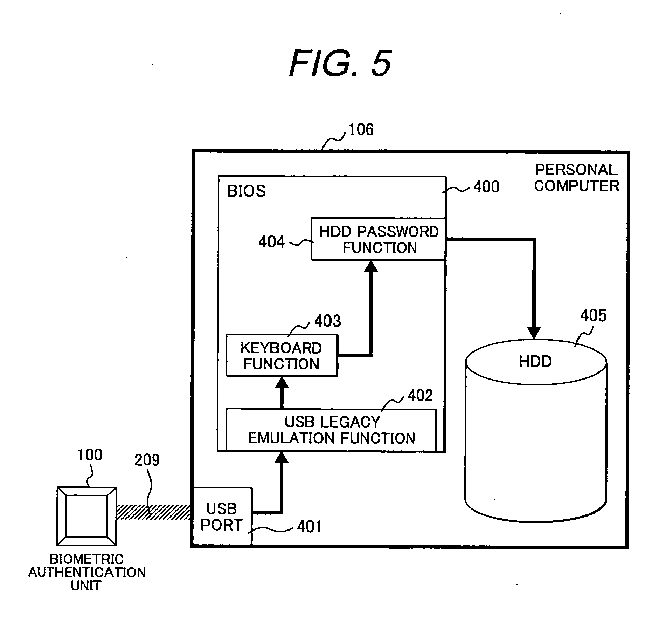

FIG. 2 is a diagram illustrating the configuration of a software module of the biometric authentication unit according to an embodiment of the present invention. FIG. 3 shows an example of a table indicating the correspondence between biometric authentication information and passwords. FIG. 4 shows an example of a HDD password input screen according to an embodiment of the present invention. FIG. 5 is a block diagram illustrating a USB legacy emulation function of a BIOS that is used when a HDD password is input into a personal computer. In FIG. 2, arrow marks joining various processing parts indicate data transfer paths.

When connected to a personal computer, the biometric authentication unit according to the present embodiment is recognized as a USB keyboard by the personal computer. The biometric authentication unit then transmits user-input biometric information after converting it to a password containing text information. It is assumed that the biometric authentication unit according to the present embodiment is connected before power-on and used to enter HDD password information, for instance, at BIOS startup.

A process performed by the biometric authentication unit to return processing to the personal computer in accordance with FIG. 2, which shows the configuration of the software module of the biometric authentication unit, will be described below.

First of all, a biometric information input part 201 enters human biometric information 200 (e.g., fingerprint, vein, or iris) for use in personal authentication. The entered biometric information 200 is sent to a biometric information conversion part 202 and converted to authentication format biometric information, which is used in a succeeding authentication processing part 203 to compare the entered biometric information 200 against preregistered biometric information 207 of a user.

The authentication processing part 203 receives the authentication format biometric information from the biometric information conversion part 202 and compares it against the user's authentication format biometric information 207 stored in a memory part 206. If the resulting relevance ratio is not lower than predetermined ratio, the authentication processing part 203 verifies that a person who has entered the biometric information 200 is a registered user. Upon completion of user authentication, the authentication processing part 203 instructs a scancode conversion part 204 to read HDD password information 208.

The memory part 206 stores the authentication format biometric information 207 about users of the personal computer to be connected and HDD password information 208 for unlocking upon biometric authentication in the form of a biometric authentication information-to-password correspondence table shown in FIG. 3. Individual data is registered by using dedicated application software. The number of registered data is not limited to one. For example, a plurality of users may share single HDD password information or, conversely, a single user mayregisterapluralityof pieces of biometric information (e.g. , register fingerprint data about different fingers in the case of fingerprint authentication). If the memory part 206 is to be implemented by hardware, it can be implemented by the non-volatile memory 101 shown in FIG. 1.

The authentication processing part 203 numerically evaluates the difference between the authentication format biometric information stored in the biometric authentication information-to-password correspondence table shown in FIG. 3 and the authentication format biometric information transmitted from the biometric information conversion part 202 in accordance with an algorithm unique to biometric information authentication. If the difference is small, the authentication processing part 203 concludes that authentication is successful. Thus, the associated password is read from the scancode conversion part as the HDD password information 208. Here, the biometric authentication information-to-password correspondence table is a table that is obtained by registering the authentication format biometric information in association with the HDD password information as shown in FIG. 3.

Upon receipt of an instruction from the authentication processing part 203, the scancode conversion part 204 reads the HDD password information 208 from the memory part 206. When the HDD password information 208 is transmitted to the personal computer 106, it is necessary to have the personal computer 106 recognize that the HDD password information 208 is input from the USB keyboard. Therefore, the scancode conversion part 204 converts the HDD password information 208 to a keyboard scancode and sends it to a USB communication part 205.

The USB communication part 205 receives the HDD password information 208 which is converted to a scancode by the scancode conversion part 204, and transmits it to the personal computer through a USB cable 209.

An operation performed by the biometric authentication unit according to an embodiment of the present invention to authenticate a personal computer's HDD password will now be described.

When a HDD of the personal computer performs HDD authentication, the message "Input HDD Password" 301 appears on a display 300 of the personal computer. In response to the displayed message, the user enters the biometric information 200 into the biometric authentication unit 100. When authentication is successfully completed, the scancode for the HDD password is transferred from the biometric authentication unit 100 to the personal computer 106 and input into the screen shown in FIG. 4. The HDD is then unlocked to start up an OS on the HDD.

When an administrator password or user password is to be input as another password for the same BIOS for the password input of another function (OS function activation limitation, BIOS setup, etc.), the biometric authentication unit 100 according to the present embodiment may be used for substitute input.

As described above, the biometric authentication unit 100 according to the present embodiment causes a personal computer to recognize it as a USB keyboard. Such recognition occurs because a USB legacy emulation function of the BIOS is used.

The USB legacy emulation function of the BIOS, which is used by the biometric authentication unit 100 according to the present embodiment to input a HDD password into a personal computer, will now be described with reference to FIG. 4.

The USB legacy emulation function 402 works so that a USB-connected mouse and keyboard look like PS2 devices.

When the USB legacy emulation function 402 of the BIOS 400 is enabled, a USB device can be used at a basic input/output level. More specifically, the HDD password information 208 received by a USB port 401 of the personal computer 106 can be input into the screen shown in FIG. 4 by using a keyboard function 403 offered by the BIOS 400. The input HDD password information 208 unlocks the HDD 405 through a password release command of a HDD password function 404 offered by the BIOS 400.

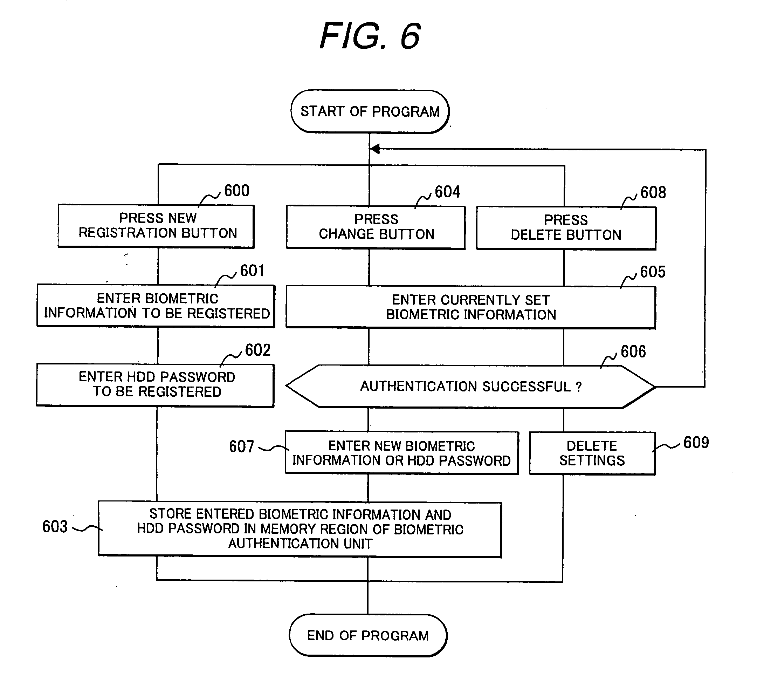

A process performed to register biometric information and a HDD password in the biometric authentication unit according to an embodiment of the present invention or update them will now be described with reference to FIGS. 6 to 7F.

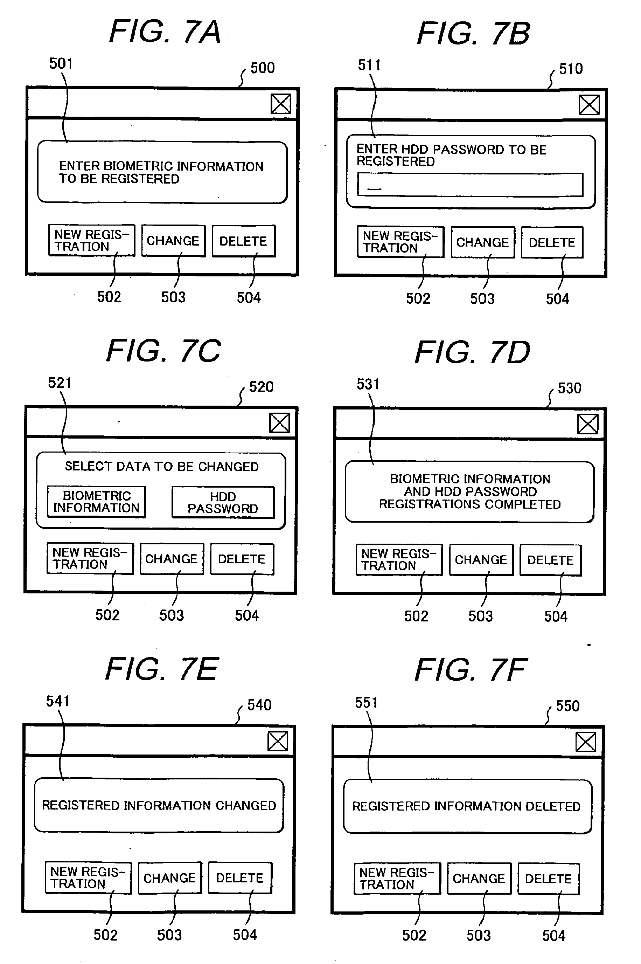

Fig. 6 is a flowchart illustrating a process that is performed by a program of the biometric authentication unit to register biometric information and a HDD password or update them. FIGS. 7A to 7F show biometric information management screens for registering biometric information and a HDD password in the biometric authentication unit or updating them.

When a program beginning operation is performed, the biometric information management screen shown in FIG. 7A opens to display the New Registration button 502, the Change button 503, and the Delete button 504.

In the case of new registration, step 600 is performed to press the New Registration button 502 with a mouse or other pointing device.

Next, step 601 is performed in response to a displayed message 501 to enter a fingerprint, a vein pattern, or other biometric information with an input device (not shown).

Next, the biometric information management screen shown in FIG. 7B opens. In response to a displayed message 511, step 602 is performed to press the New Registration button 512 with the mouse or other pointing device and enter a target HDD password, which is to be newly registered, from a keyboard of the personal computer. If this password setting process is provided with a password re-input scheme, it is possible to avoid a registration failure.

Next, step 603 is performed to store the biometric information and HDD password in the memory part 206 of the biometric authentication unit. The biometric information management screen shown in FIG. 7D opens when biometric information and a HDD password are newly registered.

When any registered information is to be changed, step 604 is performed to press the Change button 503 with the mouse or other pointing device.

Next, step 605 is performed to enter the currently set biometric information for security assurance. This step needs to be completed to prevent registered information from being changed by a person other than a legitimate user.

Step 606 is then performed to check whether authentication is successfully done. When authentication is successful, either a biometric information change or a HDD password change is selected with the mouse or other pointing device in response to a message 521 displayed in the biometric information management screen shown in FIG. 7C. When, on the other hand, authentication is not successful, the biometric information management screen shown in FIG. 7A opens again.

Next, step 607 is performed to enter new biometric information or a new HDD parameter. When a biometric information change is selected, the biometric information management screen shown in FIG. 7A opens. New biometric information needs to be input into the currently open screen. When, on the other hand, a HDD password change is selected, the biometric information management screen shown in FIG. 7B opens. A new HDD password needs to be input into the currently open screen from the keyboard of the personal computer.

Next, step 603 is performed to store the newly entered biometric information or HDD password in the memory part 206 of the biometric authentication unit. When the registered information is changed as described above, the biometric information management screen shown in FIG. 7E opens.

When any registered information is to be deleted, step 608 is performed to press the Delete button 504 with the mouse or other pointing device. Step 605 is then performed to check the currently set biometric information for authentication purposes. Next, step 606 is performed to check whether authentication is successfully done. When authentication is successful, step 609 is performed to open the biometric information management screen 550 shown in FIG. 7F and delete both the registered biometric information and HDD password.

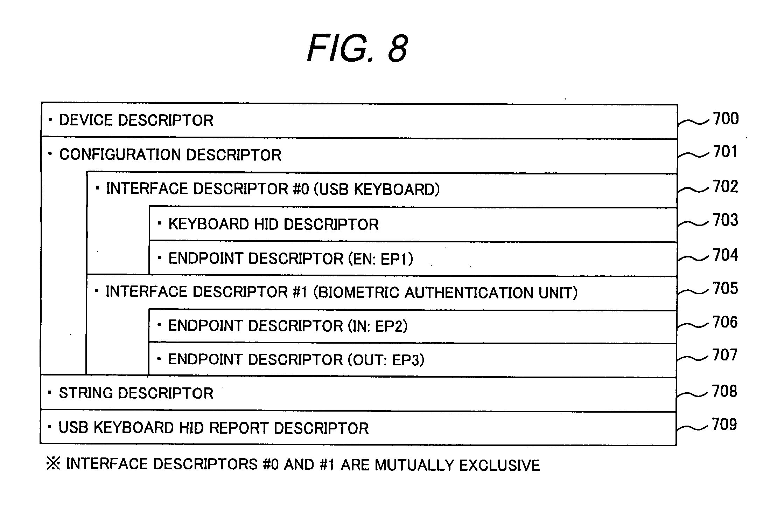

A method of implementing the biometric authentication unit according to an embodiment of the present invention with a USB will now be described with reference to FIGS. 8 to 10.

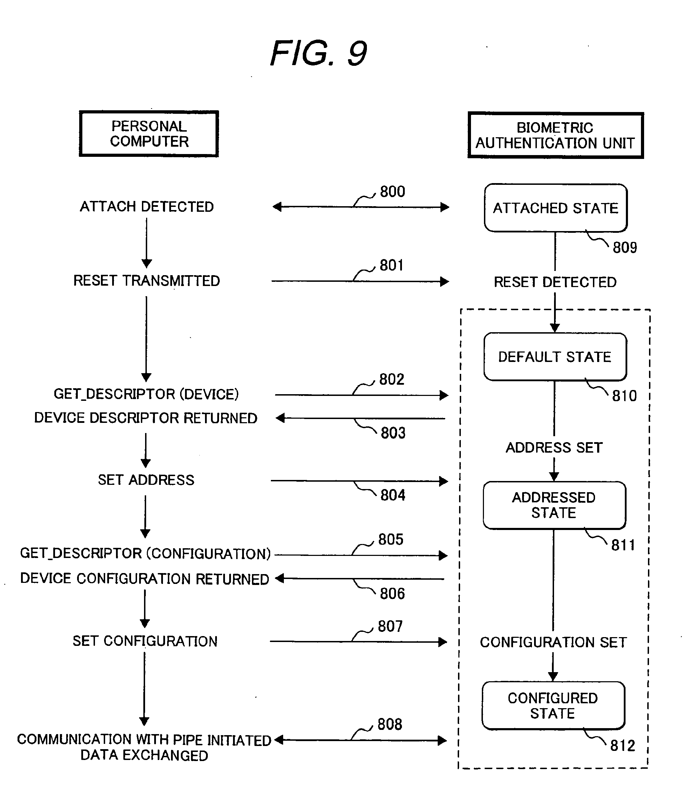

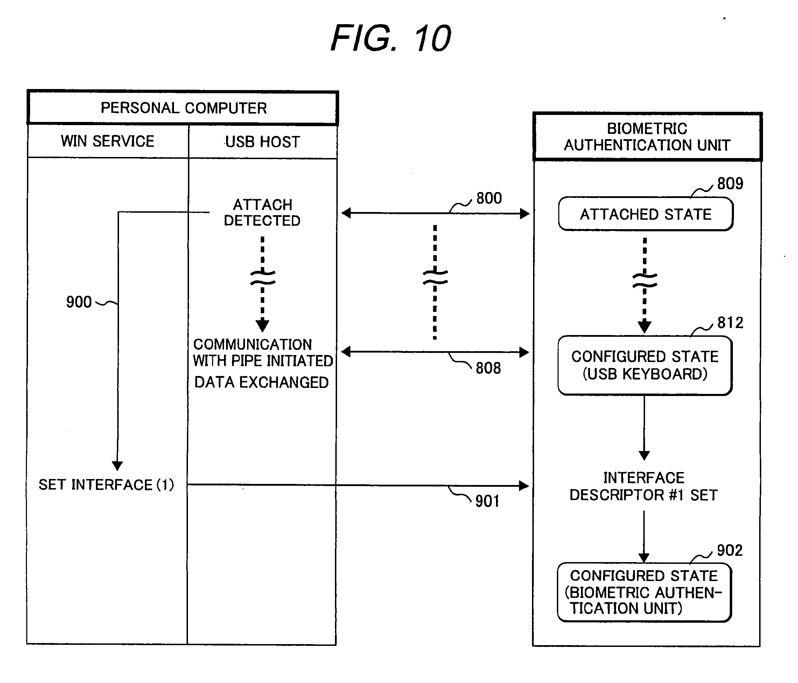

FIG. 8 is a diagram illustrating a typical configuration of a USB descriptor retained by firmware of the biometric authentication unit. FIG. 9 is a timing diagram illustrating how the biometric authentication unit exercises control over setting change processing after OS startup. FIG. 10 is a timing diagram illustrating a control procedure that is performed to let the OS recognize the biometric authentication unit as a biometric authentication device instead of a USB keyboard.

The biometric authentication unit 100 according to the present embodiment includes a USB descriptor shown in FIG. 8. This ensures that the biometric authentication unit 100 is recognized as a USB keyboard when HDD password authentication is performed for the BIOS, and enables the OS to recognize the biometric authentication unit 100 as a biometric authentication device instead of a USB keyboard after the HDD password is released to start up the OS.

A USB device has built-in firmware which retains its descriptor. The descriptor is a set of pieces of USB device information such as a class, ID, name, and various settings. When a USB device is connected to a personal computer, its descriptor information is transmitted to the personal computer to establish a connection structure between the personal computer and USB device. A process performed by a USB host (personal computer) to receive the descriptor information and recognize the USB device is called "enumeration."

As shown in FIG. 8, the descriptor according to the present embodiment is configured to include two interface descriptors: a USB keyboard interface descriptor 702 and a biometric authentication unit interface descriptor 705. Further, the USB keyboard and biometric authentication unit interface descriptors are set to be mutually exclusive so that they will not be simultaneously used.

By default, the USB keyboard interface descriptor 702 (interface descriptor #0) is used. When a HDD password is to be input as a substitute, the biometric authentication unit is connected in accordance with the contents of the default interface descriptor #0 (702) and used as a USB keyboard to exchange data. After the OS is started up, however, the biometric authentication unit is used as a biometric authentication device. It is therefore necessary to perform setting change processing on the biometric authentication unit interface descriptor 705.

The setting change processing will now be described with reference to FIG. 9.

When the OS starts up, a USB path resets to start re-connect processing for a connected USB device.

When the personal computer detects that the USB device is connected (attached) to the USB port (800), the personal computer transmits a reset signal to the biometric authentication unit (801).

Upon detection of the reset signal, the biometric authentication unit switches from an Attached state 809 to a Default state 810.

Next, the personal computer issues a Get_Descriptor request, which is a USB standard request, to demand a USB device descriptor (802). The biometric authentication unit then returns USB keyboard interface descriptor information 702 (803).

Next, the personal computer issues a Set_Address request and assigns a device address to the biometric authentication unit (804). The biometric authentication unit then switches from the Default state 810 to an Addressed state 811.

Further, the personal computer issues a Get_Descriptor request (805). The biometric authentication unit then returns a plurality of pieces of detailed descriptor information such as a configuration descriptor, interface descriptor, and endpoint descriptor (806). The firmware for the biometric authentication unit is initially set up so that the biometric authentication unit returns the USB keyboard interface descriptor information 702 as the interface descriptor in response to the USB standard request Get_Descriptor.

The personal computer references the above-mentioned pieces of descriptor information and loads a device driver.

At the above stage, the initially selected interface descriptor #0 (USB keyboard descriptor 702) is returned. Eventually, the personal computer issues a Set_Configuration request (807).

Upon completion of configuration setup for the biometric authentication unit, the biometric authentication unit switches from the Addressed state 811 to a Configured state 812 and becomes ready for data exchange with the personal computer.

The above-described process is the same as an enumeration process performed at personal computer startup. In the resulting state, the personal computer recognizes the biometric authentication unit as a USB keyboard. It is therefore necessary to change the setup for the biometric authentication unit. The setup change process to be performed will be described below with reference to FIG. 10.

The USB host of the personal computer uses an application dedicated to the biometric authentication unit or a resident program to monitor whether the biometric authentication unit is attached. When it detects that the biometric authentication unit is attached, it sends a relevant communication to an OS service (900).

The OS service of the personal computer issues a Set_Interface request which changes the interface descriptor retained by the biometric authentication unit to an interface descriptor that is mutually exclusive to the current setting (to interface descriptor #1, which is the biometric authentication unit interface descriptor in the present embodiment) (901).

In response to the Set_Interface request, the biometric authentication unit resets various settings of the biometric authentication unit in accordance with the information included in interface descriptor #1 (the biometric authentication unit interface descriptor). This causes the personal computer to recognize the biometric authentication unit as a biometric authentication device instead of a USB keyboard (902).

Even when the biometric authentication unit is connected to the personal computer after OS startup, an enumeration process is performed in the same manner as indicated in the timing diagram of FIG. 10.

## Claims

1. A biometric authentication unit (100) connected to a personal computer (106) through a USB interface, the biometric authentication unit (100) comprising:
a biometric information input part (201) which inputs biometric information (200) of a user;
a biometric information conversion part (202) which converts the biometric information (200) of the user to authentication format biometric information;
amemorypart (206) which stores the authentication format biometric information in association with password information;
an authentication processing part (207) which forms a judgment by comparing authentication format biometric information input from the biometric information input part (201) against the authentication format biometric information (207) stored in the memory part (206);
a scancode conversion part (204) which converts the password information to the password information in a keyboard input format; and
a USB communication part (205) which exchanges data with the personal computer (106) through the USB interface;
wherein, when the personal computer performs user authentication with a password, the biometric authentication unit (100) transmits to the personal computer (106) the password information that corresponds to biometric information input to the authentication unit (207).

2. The biometric authentication unit (100) according to claim 1,
wherein, when the password information is to be transmitted to the personal computer (106), the password information is converted to a scan code that a keyboard outputs.

3. The biometric authentication unit (100) according to claim 1, further comprising:
a USB descriptor which is retained in an internal memory device of the biometric authentication unit,
wherein the USB descriptor includes a USB keyboard interface descriptor and a biometric authentication unit interface descriptor, the USB keyboard interface descriptor and the biometric authentication unit interface descriptor being mutually exclusive, the USB keyboard interface descriptor being selected by default as an initial enumeration setting.

4. The biometric authentication unit according to claim 3,
wherein, when USB re-connect setup is performed after OS start up of the personal computer, the enumeration setting is changed from the USB keyboard interface descriptor to the biometric authentication unit interface descriptor.

5. A biometric authentication method for use in a biometric authentication unit (100) connected to a personal computer (106) through a USB interface, the method comprising the steps of:
inputting biometric information of a user;
converting the biometric information of the user to authentication format biometric information;
storing the authentication format biometric information in association with password information;
forming a judgment for authentication purposes by comparing authentication format biometric information input from a biometric information input part (201) against the authentication format biometric information stored in a memory part (206);
converting the password information to a scan code in a keyboard input format; and
transmitting the password information that corresponds to biometric information input to the authentication unit (203) to the personal computer (106) through the USB interface when the personal computer (106) performs user authentication with a password.

6. The biometric authentication method according to claim 5, further comprising the steps of:
changing an interface descriptor within a USB descriptor retained in an internal memory device (206) of the biometric authentication unit (100) from a USB keyboard interface descriptor to a biometric authentication (203) unit interface descriptor;
inputting the biometric information of the user from the biometric authentication unit (203) to register or update the authentication format biometric information; and
inputting the password information to register or update the password information.
